Europäisches Patentamt

European Patent Office

Office européen des brevets

(11) Publication number: **0 400 961**
**A2**

## (12) EUROPEAN PATENT APPLICATION

(21) Application number: **90305824.6**

(22) Date of filing: **29.05.90**

(51) Int. Cl.5: **C01B 33/34, B01J 29/28, C10G 11/05**

(30) Priority: **30.05.89 GB 8912392**

(43) Date of publication of application:
**05.12.90 Bulletin 90/49**

(84) Designated Contracting States:
**AT BE CH DE DK ES FR GB GR IT LI NL SE**

(71) Applicant: **JOSEPH CROSFIELD & SONS LTD.**
**Bank Quay**
**Warrington, Cheshire, WA5 1AB(GB)**

(72) Inventor: **Araya, Abraham**
**53 Friar's Close, Bebington**
**Wirral, Merseyside L63 3HY(GB)**

(74) Representative: **Coleiro, Raymond et al**
**MEWBURN ELLIS 2 Cursitor Street**
**London EC4A 1BQ(GB)**

(54) **Zeolites.**

(57) A crystalline aluminosilicate having the x-ray diffraction diagram of offretite and stable up to at least 900°C is characterised by a crystallite size range of from about 0.05 micron to about 2.0 micron forming open structure particles having an average particle size in the range from about 0.1 micron to about 10 micron.

It can be prepared by reacting a synthesis gel comprising silica, potassium hydroxide and metakaolin in the presence of a nucleating gel comprising silica, potassium hyroxide, metakaolin and a cationic template, the metakaolin having been obtained by calcination at a temperature of at least about 550°C and having an average particle size below 5 micron.

EP 0 400 961 A2

## ZEOLITES

Field of the invention

This invention relates to crystalline alumino-silicates having the offretite structure and providing advantages when used in the cracking of petroleum fractions. These zeolites are also of value in absorption, ion exchange and gas separation.

## BACKGROUND TO THE INVENTION

The offretite structure of crystalline aluminosilicates has been well characterised in the literature, for example see the standard work of Breck "Zeolite Molecular Sieves" published by John Wiley & Sons 1974. Offretites obtainable from natural and synthetic routes are known and the present invention, whilst specifically directed to their utility in petroleum cracking, describes zeolites and their preparation of value in other fields.

The uses of zeolites in petroleum cracking and other applications, e.g. adsorption, gas separation and ion exchange, are well documented. Thus, US-A-4734539 discloses isomerization of naphtha with a medium pore zeolite catalyst, for example an offretite-type zeolite material having a particle size of from about 10 to as low as <0.1 microns. The incorporation of an offretite zeolite in a zeolite catalyst composition for petroleum cracking is described in EP-A-0118382 (CNRS). The offretite has a hexagonal structure apparently necessary for achieving thermal stability. It is prepared by reacting a synthesis gel comprising silica, potassium hydroxide and a kaolin (for example, metakaolin obtained by calcining kaolin at 500°C), in the presence of a nucleating gel also comprising silica, potassium hydroxide and the kaolin, but additionally comprising a cationic template.

General description of the invention

The invention provides novel synthetic offretite zeoiltes chracterised by having an average particle size range from about 0.1 micron to about 10 micron and having a crystal habit of a rod-like shape with smooth ends.

The particular value of the novel offretite according to the present invention is derived from its relatively small crystallite size and particle structure; when incorporated in a zeolite composition containing for example a faujasitic zeolite such as zeolite Y, it provides the zeolite composition with an improved octance enhancement property, this improvement being greater as compared to incorporation into the composition of offretite with larger crystallite and particle sizes.

The invention provides a thermally stable crystalline aluminosilicate having the x-ray diffraction diagram of offretite and characterised by a crystallite size range from about 0.05 micron to about 2.0 micron forming open structure particles having an average particle size in the range from about 0.1 micron to about 10 micron, preferably from about 0.5 micron to about 10 micron. More preferably the average particle size lies within the approximate range 1-5 micron, especially above about 1 micron and below about 5 micron.

An indication of the particle size is given by measurement of the mercury intrusion pore volume. It is found that for an aluminosilicate embodying the invention the mercury intrusion pore volume is at least about 0.5 cc/g for pores below 0.5 micron. Thus, the aluminosilicate has a high porosity at the small pore level, which is indicative of a small particle size.

When assessing stability by Differential Thermal Analysis the structure is found to be stable up to at least 900°C and is usually stable up to at least 1000°C.

Thus, even though the crystal habit resembles somewhat the conventional "rice" shape, rather than a hexagonal shape, it still has high thermal stability; this is surprising and apparently contrary to the teaching of EP-A-0118382.

The invention also provides a catalyst composition for hydrocarbon cracking comprising a faujasitic zeolite, a matrix material and, as octane enhancement additive, the abovementioned crystalline aluminosilicate, preferably in an amount of from 0.1 to 10% by weight of the total weight of the composition.

However, the aluminosilicates in accordance with the invention may be used in catalytic processes in general, or in adsorption, gas separation or ion exchange processes.

The invention further extends to a method of preparing a crystalline aluminosilicate wherein a synthesis gel comprising silica, potassium hydroxide and metakaolin is reacted in the presence of a nucleation gel comprising silica, potassium hydroxide, metakaolin and a cationic template characterised in that the metakaolin, at least in the synthesis gel and usually in both the synthesis and nucleation gels, has been obtained by calcination of kaolin above about 550°C, preferably up to about 650°C, and has an average particle size no more than about, and preferably below, 5 micron. A feature of this method is the use of a metakaolin obtained by calcination at a temperature of at least about 550°C, preferably above 550°C, more preferably up to about 650°C, and having a small particle size. The general features of this method of preparation by which the above novel zeolites can be obtained is to react a source of silica with a source of alumina in the presence of a template compound which will usually be a quaternery ammonium salt. Examples of the latter are tetramethyl ammonium hydroxide and chloride.

A description of kaolin usable in zeolite manufacture is given in "Zeolite Molecular Sieves" by Breck (published by John Wiley) at pages 731/2.

Standard procedures

The crystalline aluminosilicates of the invention and its petroleum cracking properties were determined using the following test methods.

i) Crystallite size: scanning electron microscopy (SEM).

(ii) Particle size: This is quoted as average particle size determined with the aid of a Malvern Particle SizerTM, Model MF20. This instrument made by Malvern Instruments, Malvern, England, uses the principle of Fraunhoffer diffraction utilising a low power He/Ne laser. Before measurement the sample was dispersed ultrasonically in water for a period of 7 minues to form an aqueous suspension.

iii) Mercury absorption: Mercury intrusion volumes were determined (in cc/g) by use of a Micro-meritics AutoporeTM 9220 mercury porosimeter operating over a pressure range of 0.5 to 60,000 psi.

iv) Catalytic properties: These were determined using a Micro Activity Tester under standard conditions and the characteristics of
gasoline generation
gasoline/conversion
LCO (light cycle oil)
RON (Research octane number)
Octane efficiency - this is the increase in RON divided by the loss in gasoline compared with a control.
were measured for four samples.

The standard conditions are given in an article by K. Gosling and D. Rawlence in J. Applied Catalysis 43 (1988) p 213/258.

Specific description of the invention - Best Method

An example of the preparation of offretite zeolite according to the present invention will now be given to illustrate but not limit the invention.

This procedure is similar to that described in EP-A-0118382 but with a different source of metakaolin and uses, as the silica source (unspecified in EP-A-0118382) MicrosilTM GP.

A nucleation gel was prepared by mixing:

| Deionised water | 120g |
| Potassium hydroxide (pellets BDH analar) | 17.6g |
| Tetramethyl ammonium hydroxide | 24.4g |
| Metakaolin (av. particle size 3 micron)[1] | 5.84g |
| Silica (Microsil GP of Crosfield)[2] | 21.0g |

The slurry so formed was stirred for 3 hours at ambient temperature, i.e. ca 25°C, and aged at ambient temperature with slight stirring for 7 days.

A synthesis gel was prepared by mixing:

| Deionised water | 100g |
|---|---|
| Potassium hydroxide pellets | 146.7g |
| Metakaolin (av. particle size 3 micron)[1] | 48.7g |
| Silica (Microsil GP)[2] | 175.4g |

[1] Prepared by calcining kaolin at about 580°-600°C.
[2] Silica particles having a surface area of 220 m²/g.

The slurry so formed was stirred for 3 hours at ambient temperature and then 10% (volume) of the nucleation gel added followed by the addition of 31.5g of silica (Crosfield™ M60 having a surface area of 580m²/g). The mixture was then stirred at ambient for 24 hours, transferred to an autoclave and allowed to react for 17 hours at 130°C with stirring. The product was then filtered, washed with deionised water and dried at 100°C. The template was removed by calcination in air. This zeolite was then exchanged with NH₄Cl and calcined at 550°C in air to give the hydrogen form. This zeolite was tested for catalytic properties.

X-ray analysis gave the x-ray diffraction characteristics set out in Table 1, which showed the product was crystalline offretite zeolite. Particle and crystallite size analysis showed it had an average particle size of 2.73 micron and a crystallite size of 0.6 micron. Differential Thermal Analysis (DTA) showed that the structure was stable up to 1020°C.

For comparison, an offretite zeolite was prepared in accordance with EP-A-0118382 using a metakaolin obtained by calcining in air at 500°C for 10 hours as described in Example 1 of EP-A-0118382. The metakaolin had a particle size of 7.5 microns (compare the minimum calcining temperature of 550°C and the maximum particle size of below 5 micron used in the method of the invention). The resulting offretite zeolite had a crystallite size of 1.6 micron and a particle size of 22 micron, thus showing that considerable agglomeration had occurred.

The open particle structure of the novel zeolite sample of the invention and that prepared according to EP-A-0118382 were examined using mercury intrusion. This confirmed that the zeolite sample of the invention had a smaller particle size range and more open particle structure than the zeolite prepared from the metakaolin according to EP-A-0118382.

For pores below 0.5 microns, the zeolite sample of the invention had a cumulative pore volume of 0.64 cc/g and the zeolite from the metakaolin of EP-A-0118382 one of 0.23 cc/g.

TABLE 1

| 2.theta | d(A) | hkl | $\frac{I}{I_0} \times 100$ |
|---|---|---|---|
| 7.68 | 11.503 | 100 | 100 |
| 11.70 | 7.570 | 001 | 27 |
| 13.36 | 6.63 | 110 | 41 |
| 14.02 | 6.317 | 101 | 14 |
| 15.47 | 5.728 | 200 | 22 |
| 19.45 | 4.564 | 201 | 36 |
| 20.51 | 4.330 | 210 | 58 |
| 23.30 | 3.818 | 300 | 37 |
| 23.68 | 3.757 | 211 | 84 |
| 24.82 | 3.587 | 102 | 57 |
| 26.96 | 3.307 | 220 | 25 |
| 28.31 | 3.150 | 202 | 25 |
| 31.28 | 2.860 | 212 | 40 |
| 35.98 | 2.496 | 410 | 12 |
| 40.94 | 2.205 | 330 | 8 |

TABLE II

| MAT results | | | | |
|---|---|---|---|---|
| Catalyst | A | B | C | D |
| Gasoline generation | 51.9 | 54.5 | 49.0 | 34.9 |
| Gasoline conversion | 0.73 | 0.73 | 0.67 | 0.48 |
| LCO | 15.3 | 15.1 | 13.9 | 11.6 |
| RON | 90.0 | 90.1 | 91.6 | 92.0 |
| Octane efficiency | Control | | 0.55 | 0.12 |

Thus, the catalyst of the invention (C) has an improved octane efficiency compared with catalysts (A, B and D) and has satisfactory catalytic properties.

Catalyst A was SLS-100 (a commercially available catalyst obtainable from Crosfield Chemicals of Warrington, England and based on Zeolite Y) with 5% w/w catalytically inert material added.

Catalyst B was SLS-100 containing 5% of an offretite zeolite prepared as described in EP-A-0118382.

Catalyst C was SLS-100 containing 5% of the catalyst according to the invention and Catalyst D was SLS-100 containing 5% of ZSM-5 a zeolite obtainable from the Mobil Oil Corporation of USA.

## Claims

1. A crystalline aluminosilicate having the x-ray diffraction diagram of offretite and characterised by a crystallite size range from about 0.05 micron to about 2 micron forming open structure particles having an average particle size in the range from about 0.1 micron to about 10 micron and having a thermal stability, as measured by differential thermal analysis, up to at least 900°C.

2. A crystalline aluminosilicate according to claim 1, having an average particle size in the range from about 0.5 micron to about 10 micron.

3. A method of preparing a crystalline aluminosilicate having the x-ray diffraction diagram of offretite, a crystallite size range from about 0.05 micron to about 2 micron forming open structure particles having an average particle size in the range from about 0.1 micron to about 10 micron, wherein a synthesis gel comprising silica, potassium hydroxide and metakaolin is reacted in the presence of a nucleation gel comprising silica, potassium hydroxide, metakaolin and a cationic template characterised in that the metakaolin at least in the synthesis gel has been obtained by calcination at a temperature of at least about 550°C, and has an average particle size of no more than about 5 micron.

4. A method according to claim 3, wherein the metakaolin has been obtained by calcination at a temperature of from about 550°C to about 650°C inclusive.

5. The use of the crystalline aluminosilicate defined in claim 1 in a process selected from catalysis, adsorption, gas separation and ion exchange.

6. The use according to claim 5 in a catalysis process which is a petroleum cracking process.

7. A catalyst composition for hydrocarbon cracking, which composition comprises a faujasitic zeolite, a matrix material and, as an octane enhancement additive, a crystalline aluminosilicate having the x-ray diffraction diagram of offretite and characterised by a crystallite size range from about 0.05 micron to about 2 micron forming open structure particles having an average particle size in the range from about 0.1 micron to about 10 micron.